# FASCICULE DE BREVET EUROPEEN

(11) **EP 3 284 636 B1**
(45) Date de publication et mention de la délivrance du brevet: **03.07.2019**
(21) Numéro de dépôt: 17183105.0
(22) Date de dépôt: 25.07.2017
(51) Int. Cl.: B60R 21/203, B60R 11/00, F16B 5/00

(54) **VOLANT DE VEHICULE**
LENKRAD FÜR FAHRZEUG
VEHICLE STEERING WHEEL

(30) Priorité: 16.08.2016 FR 1657762
(43) Date de publication de la demande: 21.02.2018
(73) Titulaire: Autoliv Development AB, 447 83 Vårgårda (SE)
(72) Inventeur: MORAS, Alexis, 86000 Poitiers (FR); PROUST, Nicolas, 86170 Neuville de Poitou (FR)
(74) Mandataire: Poindron, Cyrille

(56) Documents cités:
- DE-A1-102010 015 340
- DE-A1-102013 213 822
- US-A1- 2011 233 905

## Description

La présente invention concerne de manière générale un volant de véhicule monté sur un véhicule automobile, et en particulier un volant de véhicule qui comprend une pièce rapportée qui est visible par un utilisateur, et qui doit être positionnée de manière harmonieuse par rapport aux autres éléments du volant. En particulier, la pièce rapportée peut être un module de sécurité (encore appelé module airbag) embarquée sur une pièce de base du volant (l'armature par exemple) et doit être centrée par rapport aux autres pièces d'aspect du volant, et il peut être utile de prévoir des moyens de réglage de la position de la pièce rapportée.

En effet, en raison des tolérances de fabrications, il peut être nécessaire de régler la position de la pièce rapportée lors du montage du volant. Il est connu dans l'art antérieur d'employer des moyens de réglage à excentrique, comme ceux décrits dans le document US8608194B2. En contrepartie, ce système présente notamment l'inconvénient d'être complexe à mettre en oeuvre, car il faut pivoter l'excentrique d'une valeur particulière. De plus, il faut prévoir un système de glissières si le réglage ne doit se faire que dans une seule direction axiale, ce qui complique encore le dispositif complet. Enfin, un déréglage est possible, si l'excentrique pivote de manière intempestive, ou lors d'une commande inappropriée d'un opérateur.

DE102013213822 A1 décrit des moyens de réglage selon la préambule de la revendication 1.

Un but de la présente invention est de répondre aux inconvénients du document de l'art antérieur mentionné ci-dessus et en particulier, tout d'abord, de proposer un volant de véhicule muni d'une pièce rapportée et de moyens de réglage de la position de la pièce rapportée, les moyens de réglage étant simples à utiliser et simples à construire.

Pour cela un premier aspect de l'invention concerne des moyens de réglage agencés pour régler une position entre :
- une pièce de base d'un volant de véhicule, telle qu'une armature, et
- une pièce rapportée du volant de véhicule, comprenant par exemple un module de sécurité, et embarquée sur la pièce de base,
   par le biais d'au moins une portion de centrage solidaire de l'une de la pièce de base ou de la pièce rapportée,
   les moyens de réglage étant agencés pour s'engager avec l'autre de la pièce de base ou de la pièce rapportée, et comprenant une surface de référence agencée pour s'engager avec ladite au moins une portion de centrage, caractérisés :
   en ce que les moyens de réglage comprennent au moins un module de réglage avec :
   - au moins un élément de réception allongé le long d'une direction de projection,
   - au moins un élément de réglage avec une contre-forme agencée pour recevoir ledit au moins un élément de réception, pour empêcher une rotation autour de la direction de projection, entre ledit au moins un élément de réception et ledit au moins un élément de réglage,
   en ce que ledit au moins un élément de réglage est agencé pour s'assembler avec ledit au moins un élément de réception selon une première position de montage ou au moins une deuxième position de montage,
   et en ce que l'un dudit au moins un élément de réception ou dudit au moins un élément de réglage est solidaire de la surface de référence et décalé par rapport à la surface de référence, pour décaler l'autre dudit au moins un élément de réception ou dudit au moins un élément de réglage par rapport à la portion de centrage lorsque la surface de référence est engagée avec la portion de centrage, de sorte à imposer une première position de la pièce rapportée par rapport à la pièce de base dans la première position de montage, ou à imposer une deuxième position de la pièce rapportée par rapport à la pièce de base dans la deuxième position de montage.

Les moyens de réglage selon la mise en oeuvre ci-dessus pour un volant comprennent un module de réglage avec un décalage d'un axe de l'élément de réglage ou de l'élément de réception, par rapport à un axe d'une surface de centrage ou de référence. Ainsi, en montant l'élément de réglage dans ou sur l'élément de réception suivant la première ou la deuxième position de montage, on décale la pièce rapportée par rapport à la pièce de base d'une première ou d'une deuxième valeur, ce qui permet de régler sa position de manière particulièrement simple et rapide lors des opérations de fabrication.

Par ailleurs, l'élément de réception reçoit l'élément de réglage pour le bloquer en rotation, c'est-à-dire pour empêcher toute rotation relative entre ces deux éléments, dans la première ou la deuxième position de montage. En conséquence, lorsque le module de réglage est monté, la position de réglage est définitive et ne peut être changée qu'en démontant le module de réglage (en désaccouplant l'élément de réglage et l'élément de réception). Il est alors facile de régler la position de la pièce rapportée, puisque le module de réglage n'offre qu'un nombre limité et fini de positions de montage. Bien entendu, on entend par "empêcher" une rotation un indexage définitif des pièces entre elles, dans la limite de leur résistance mécanique. Par contre, le blocage en rotation est définitif, et n'est pas temporaire ou réversible comme l'est un freinage procuré par un système à cliquet. Ainsi, il n'y a pas besoin de dispositif complémentaire tel qu'une vis pour figer les moyens de réglage dans la position choisie.

Le décalage est prédéfini dans la première ou dans la deuxième position de montage. On peut envisager par exemple de prévoir de manière statistique la valeur du décalage, pour remédier au plus grand nombre de cas de figures. Il est à noter que l'opérateur ne peut pas modifier la position de la pièce rapportée une fois le module de réglage monté, et que le réglage ne peut pas se modifier tout seul, car l'élément de réception recevant l'élément de réglage n'autorise aucune rotation relative entre ces deux éléments.

On entend par élément de réception une surface formant une portion mâle ou femelle d'une pièce, et par élément de réglage la contre-forme, c'est à dire une surface formant une portion femelle ou mâle d'une pièce de réglage. On peut envisager des surfaces cylindriques (mais pas de section circulaire, car il doit y avoir arrêt en rotation) ou légèrement coniques (avec donc une légère dépouille pour pouvoir être fabriquées par moulage).

Les moyens de réglage sont agencés pour s'engager avec l'autre de la pièce de base ou de la pièce rapportée, et comprennent une surface de référence agencée pour s'engager avec ladite au moins une portion de centrage. En d'autres termes, les moyens de réglage sont engagés ou solidaires ou embarqués sur l'autre de la pièce de base ou de la pièce rapportée (la pièce exempte de portion de centrage), et peuvent s'engager (de manière réversible ou selon plusieurs positions de montage) avec la portion de centrage.

Avantageusement, les moyens de réglage, une fois assemblés, bloquent les degrés de liberté de l'élément de réception et/ou de l'élément de réglage par rapport à la pièce de base et/ou à la pièce rapportée. En particulier, dans un plan perpendiculaire à la direction de projection, l'élément de réception et/ou l'élément de réglage sont bloqués en rotation et/ou en translation.

Avantageusement, les moyens de réglage sont agencés pour définir un nombre discret et limité de positions possibles d'assemblage, de sorte à proposer des positions de réglages distinctes qui répondent au plus grand nombre de défauts.

Avantageusement, les moyens de réglage sont agencés pour régler la position de la pièce rapportée dans un plan de base, et dans lequel la direction de projection est perpendiculaire au plan de base.

Avantageusement, ladite au moins une deuxième position de montage est orientée à 180° de la première position de montage par rapport à la direction de projection. Il suffit de faire pivoter d'un demi-tour l'empreinte ou le pion pour effectuer le réglage de la position de la pièce rapportée.

Avantageusement, ledit au moins un élément de réglage est agencé pour s'assembler avec ledit au moins un élément de réception selon au moins une troisième position de montage,
et ledit un dudit au moins un élément de réception ou dudit au moins un élément de réglage est agencé pour positionner l'autre dudit au moins un élément de réception ou dudit au moins un élément de réglage par rapport à la portion de centrage, de sorte à imposer une troisième position de la pièce rapportée par rapport à la pièce de base dans la troisième position de montage.

Avantageusement, un point de référence de la pièce rapportée dans la troisième position de montage, est situé au milieu d'un segment ayant pour extrémités le point de référence de la pièce rapportée dans la première position de montage, et le point de référence de la pièce rapportée dans la deuxième position de montage. On peut envisager que dans la troisième position, aucun décalage n'est imposé, si bien que la troisième position revient à une position de montage nominale. On peut alors obtenir simplement un positionnement nominal, ou alors un positionnement extrémal dans une direction, ou un positionnement extrémal dans une direction opposée.

Avantageusement, les moyens de réglage sont agencés pour régler la position de la pièce rapportée dans une seule direction.

Avantageusement, la première position de montage est différente de la deuxième position de montage.

Avantageusement, les moyens de réglage comprennent des moyens de maintien élastiques dudit au moins un élément de réglage sur ledit au moins un élément de réception, au moins selon la direction de projection. Le module de réglage peut être transporté alors qu'il est monté sur la pièce de base ou la pièce rapportée et cela de manière aisée par un opérateur sans risque de perdre les composants.

Avantageusement, ledit au moins un élément de réglage présente un ajustement serré avec ledit au moins un élément de réception. Un tel ajustement serré procure la possibilité de transporter les pièces sans risque de démontage ou perte.

Avantageusement, ledit au moins un élément de réception présente une section transversale procurant un arrêt en rotation par rapport à la direction de projection. Une telle section peut être rectangulaire ou oblongue pour procurer l'arrêt en rotation avec l'élément de réglage.

Un second aspect de l'invention concerne un volant de véhicule comprenant :
- une pièce de base, telle qu'une armature,
- au moins une pièce rapportée, comprenant par exemple un module de sécurité, et embarquée sur la pièce de base,
- des moyens de réglage selon l'une des revendications précédentes.

Avantageusement, au moins l'un dudit au moins un élément de réception ou dudit au moins un élément de réglage est amovible par rapport au volant de véhicule. Cela permet un réglage aisé.

Avantageusement, ladite au moins une portion de centrage présente un axe médian et/ou un plan médian d'accouplement avec les moyens de réglage, et ledit un dudit au moins un élément de réception ou dudit au moins un élément de réglage est décalé par rapport à l'axe médian et/ou au plan médian d'accouplement.

Autrement dit, ladite au moins une portion de centrage présente un premier axe médian et/ou un premier plan médian d'accouplement avec les moyens de réglage, et ledit un dudit au moins un élément de réception ou dudit au moins un élément de réglage présente un deuxième axe médian et/ou un deuxième plan médian d'accouplement avec ladite au moins une portion de centrage, ledit deuxième axe médian et/ou deuxième plan médian d'accouplement est décalé par rapport audit premier axe médian et/ou premier plan médian d'accouplement.

Avantageusement, ledit au moins un élément de réception est solidaire de la pièce de base, et ledit au moins un élément de réglage est agencé sur une douille amovible, agencée pour s'engager avec la pièce rapportée.

Avantageusement, les moyens de réglage comprennent deux modules de réglage. On peut prévoir également une liaison glissière supplémentaire (un pion entre deux ailes par exemple) pour positionner la pièce rapportée de manière isostatique sur la pièce de base.

Avantageusement, la pièce rapportée est une platine fixe d'avertisseur sonore, montée de manière fixe par rapport à la pièce de base par l'intermédiaire dudit au moins un module de réglage, et comprenant un module de sécurité mobile par rapport à la pièce rapportée. Les modules de réglage peuvent être conçus indépendamment du mouvement nécessaire à l'avertisseur sonore, puisqu'ils ne positionnent que la platine fixe.

Avantageusement, l'un dudit élément de réception ou dudit élément de réglage présente une forme prismatique et/ou une section transversale procurant un arrêt en rotation. Une telle section peut être rectangulaire ou oblongue.

Un troisième aspect de l'invention concerne un véhicule automobile comprenant un volant de véhicule selon le second aspect de l'invention.

Avantageusement, les moyens de réglage comprennent une marque visuelle agencée pour indiquer une direction de réglage de la position de la pièce rapportée, visible pour un opérateur, une fois le module de réglage monté. On peut envisager d'inscrire une flèche qui indique le sens du décalage engendré par la position choisie.

Un quatrième aspect de l'invention concerne un kit de réglage pour les moyens de réglage selon le premier aspect de l'invention, comprenant une pluralité dudit au moins un élément de réception ou dudit au moins un élément de réglage agencé pour décaler l'autre dudit au moins un élément de réception ou dudit au moins un élément de réglage par rapport à la portion de centrage, chacun agencé pour décaler d'une valeur spécifique l'autre dudit au moins un élément de réception ou dudit au moins un élément de réglage par rapport à la portion de centrage.

Autrement dit, l'invention concerne un volant de véhicule comprenant :
- une pièce de base, telle qu'une armature,
- au moins une pièce rapportée, comprenant par exemple un module de sécurité, et embarquée sur la pièce de base,
- au moins une portion de centrage solidaire de l'une de la pièce de base ou de la pièce rapportée,
- des moyens de réglage engagés avec ladite au moins une portion de centrage et avec l'autre de la pièce de base ou de la pièce rapportée, pour permettre un réglage d'une position de la pièce rapportée sur la pièce de base,
   caractérisé :
   en ce que les moyens de réglage comprennent au moins un module de réglage avec :
      - au moins un pion allongé le long d'une direction de projection,
      - au moins une empreinte formant une contre-forme agencée pour recevoir ledit au moins un pion et pour empêcher ainsi une rotation autour de la direction de projection, entre ledit au moins un pion et ladite au moins une empreinte,
   en ce que ladite au moins une empreinte est agencée pour recevoir ledit au moins un pion selon une première position de montage ou au moins une deuxième position de montage,
   et en ce que l'un dudit au moins un pion ou de ladite au moins une empreinte est agencé pour décaler l'autre dudit au moins un pion ou de ladite au moins une empreinte par rapport à la portion de centrage, de sorte à imposer une première position de la pièce rapportée par rapport à la pièce de base dans la première position de montage, ou à imposer une deuxième position de la pièce rapportée par rapport à la pièce de base dans la deuxième position de montage.

Le volant selon la mise en oeuvre ci-dessus comprend un module de réglage avec un décalage d'un axe de l'empreinte ou du pion, par rapport à un axe d'une surface de centrage ou de référence. Ainsi, en montant le pion dans l'empreinte suivant la première ou la deuxième position de montage, on décale la pièce rapportée par rapport à la pièce de base d'une première ou d'une deuxième valeur, ce qui permet de régler sa position de manière particulièrement simple et rapide lors des opérations de fabrication.

Par ailleurs, l'empreinte reçoit un pion pour le bloquer en rotation, c'est-à-dire pour empêcher toute rotation relative entre ces deux éléments, dans la première ou la deuxième position de montage. En conséquence, lorsque le module de réglage est monté, la position de réglage est définitive et ne peut être changée qu'en démontant le module de réglage (en désaccouplant l'empreinte et le pion). Il est alors facile de régler la position de la pièce rapportée, puisque le module de réglage n'offre qu'un nombre limité et fini de positions de montage. Bien entendu, on entend par "empêcher" une rotation un indexage définitif des pièces entre elles, dans la limite de leur résistance mécanique. Par contre, le blocage en rotation est définitif, et n'est pas temporaire ou réversible comme l'est un freinage procuré par un système à cliquet. Ainsi, il n'y a pas besoin de dispositif complémentaire tel qu'une vis pour figer les moyens de réglage dans la position choisie.

Il est à noter que l'expression "l'empreinte reçoit un pion" est équivalente à "le pion reçoit l'empreinte", car les deux composants s'assemblent l'un avec l'autre.

Par construction, le décalage est prédéfini dans la première ou dans la deuxième position de montage, il n'est pas ajustable. On peut envisager par exemple de prévoir de manière statistique la valeur du décalage, pour remédier au plus grand nombre de cas de figures. Il est à noter que l'opérateur ne peut pas modifier la position de la pièce rapportée une fois le module de réglage monté, et que le réglage ne peut pas se modifier tout seul, car l'empreinte recevant le pion n'autorise aucune rotation relative entre ces deux éléments.

Avantageusement, au moins l'un dudit au moins un pion ou de ladite au moins une empreinte est amovible par rapport au volant de véhicule. Cela permet un réglage aisé.

Avantageusement, au moins l'un dudit au moins un pion ou de ladite au moins une empreinte est amovible par rapport au volant de véhicule, lors d'une phase de montage du volant de véhicule. Le démontage n'est possible que lorsque le volant est en cours de montage. Une fois le volant assemblé, le module de réglage est caché par d'autres pièces, si bien qu'il ne peut plus être démonté : l'empreinte ne peut pas être dégagée du pion.

Avantageusement, ladite au moins une portion de centrage présente un premier axe médian et/ou un premier plan médian d'accouplement avec les moyens de réglage, et ledit un dudit au moins un pion ou de ladite au moins une empreinte présente un deuxième axe médian et/ou un deuxième plan médian d'accouplement avec ladite au moins une portion de centrage, ledit deuxième axe médian et/ou deuxième plan médian d'accouplement est décalé par rapport audit premier axe médian et/ou premier plan médian d'accouplement.

Autrement dit, ladite au moins une portion de centrage présente un premier axe médian et/ou un premier plan médian d'accouplement avec les moyens de réglage, et ledit un dudit au moins un pion ou de ladite au moins une empreinte est décalé par rapport audit premier axe médian et/ou premier plan médian d'accouplement.

Avantageusement, les moyens de réglage sont agencés pour régler la position de la pièce rapportée dans un plan de base, et la direction de projection est perpendiculaire au plan de base. En conséquence, le déplacement de la pièce rapportée, entre la première et la deuxième position, est contenu dans le plan de base.

Avantageusement, ladite au moins une deuxième position de montage est orientée à 180° de la première position de montage par rapport à la direction de projection. Il suffit de faire pivoter d'un demi-tour l'empreinte ou le pion pour effectuer le réglage de la position de la pièce rapportée.

Avantageusement, ladite au moins une empreinte est agencée pour recevoir ledit au moins un pion selon au moins une troisième position de montage,
et ledit un dudit au moins un pion ou de ladite au moins une empreinte est agencé pour positionner l'autre dudit au moins un pion ou de ladite au moins une empreinte par rapport à la portion de centrage, de sorte à imposer une troisième position de la pièce rapportée par rapport à la pièce de base dans la troisième position de montage.

Avantageusement, un point de référence de la pièce rapportée dans la troisième position de montage, est situé au milieu d'un segment ayant pour extrémités le point de référence de la pièce rapportée dans la première position de montage, et le point de référence de la pièce rapportée dans la deuxième position de montage. On peut envisager que dans la troisième position, aucun décalage n'est imposé, si bien que la troisième position revient à une position de montage nominale. On peut alors obtenir simplement un positionnement nominal, ou alors un positionnement extrémal dans une direction, ou un positionnement extrémal dans une direction opposée.

Avantageusement, les moyens de réglage sont agencés pour régler la position de la pièce rapportée dans une seule direction.

Avantageusement, la première position de montage est différente de la deuxième position de montage.

Avantageusement, les moyens de réglage comprennent des moyens de maintien élastiques de ladite au moins une empreinte sur ledit au moins un pion, au moins selon la direction de projection. Le module de réglage peut être transporté alors qu'il est monté sur la pièce de base ou la pièce rapportée et cela de manière aisée par un opérateur sans risque de perdre les composants.

Avantageusement, ledit au moins un pion est solidaire de la pièce de base, et ladite au moins une empreinte est agencée sur une douille amovible, agencée pour s'engager avec la pièce rapportée.

Avantageusement, ladite au moins une empreinte présente un ajustement serré avec le dit au moins un pion. Un tel ajustement serré permet de solidariser l'empreinte sur le pion.

Avantageusement, ladite au moins une empreinte présente une portion agencée pour créer l'ajustement serré avec le dit au moins un pion. On peut envisager des pattes en regard l'une de l'autre pour pincer une partie dudit au moins un pion. On peut préférentiellement positionner ces pattes sur des surfaces de l'empreinte qui ne sont pas engagées avec ladite au moins une portion de centrage de sorte que le serrage n'influe pas sur le réglage souhaité.

Avantageusement, la douille amovible est agencée pour se clipser sur la pièce de base.

Avantageusement, les moyens de réglage comprennent deux modules de réglage. On peut prévoir également une liaison glissière supplémentaire (un pion entre deux ailes par exemple) pour positionner la pièce rapportée de manière isostatique sur la pièce de base.

Avantageusement, la pièce rapportée est une platine fixe d'avertisseur sonore, liée à la pièce de base par l'intermédiaire dudit au moins un module de réglage, et comprenant un module de sécurité mobile par rapport à la pièce rapportée. Les modules de réglage peuvent être conçus indépendamment du mouvement nécessaire à l'avertisseur sonore, puisqu'ils ne positionnent que la platine fixe.

Avantageusement, ledit au moins un pion présente une section transversale procurant un arrêt en rotation par rapport à la direction de projection. On peut envisager un pion de forme prismatique, facile à fabriquer, de même que l'empreinte, par moulage par exemple. Un tel agencement est compact et très facile à utiliser pour un opérateur de montage : la forme prismatique impose naturellement le montage dans la première ou la deuxième position.

Avantageusement, ledit au moins un module de réglage comprend au moins deux pions, de sorte à empêcher la rotation entre lesdits au moins deux pions et ladite au moins une empreinte. On peut envisager deux pions circulaires espacés l'un de l'autre, l'un formant un arrêt de l'empreinte en rotation autour de l'autre pion.

Avantageusement, les moyens de réglage comprennent une marque visuelle agencée pour indiquer une direction de réglage de la position de la pièce rapportée, visible pour un opérateur, une fois le module de réglage monté. On peut envisager d'inscrire une flèche qui indique le sens du décalage engendré par la position choisie.

Autrement dit, l'invention concerne un véhicule automobile comprenant un volant de véhicule selon l'aspect précédent.

Autrement dit, l'invention concerne un kit de réglage pour les moyens de réglage du volant de véhicule selon l'aspect précédent, comprenant une pluralité dudit au moins un pion ou de ladite au moins une empreinte agencé pour décaler l'autre dudit au moins un pion ou de ladite au moins une empreinte par rapport à la portion de centrage, chacun agencé pour décaler d'une valeur spécifique l'autre dudit au moins un pion ou de ladite au moins une empreinte par rapport à la portion de centrage.

Un tel kit peut proposer un jeu de composants (le pion ou l'empreinte, celui qui est amovible par rapport au volant par exemple), avec plusieurs valeurs de décalage et plusieurs couleurs pour faciliter l'utilisation. On peut alors aisément régler de manière fine et définitive la position de la pièce rapportée.

Un dernier aspect de l'invention concerne un procédé de fabrication d'un volant selon le premier aspect de l'invention, comprenant les étapes consistant à :
- fabriquer la pièce de base,
- mesurer un défaut de géométrie entre une portion de la pièce de base visible par un utilisateur final et l'un dudit au moins un élément de réception ou dudit au moins un élément de réglage,
- monter l'autre dudit au moins un élément de réception ou dudit au moins un élément de réglage dans la première position ou dans la deuxième position, de sorte à corriger au moins partiellement le défaut de géométrie mesuré,
- monter la pièce rapportée sur le volant.

Autrement dit, l'invention concerne un procédé de fabrication d'un volant selon un aspect de l'invention, comprenant les étapes consistant à :
- fabriquer la pièce de base,
- mesurer un défaut de géométrie entre une portion de la pièce de base visible par un utilisateur final et l'un dudit au moins un pion ou de ladite au moins une empreinte,
- monter l'autre dudit au moins un pion ou de ladite au moins une empreinte dans la première position ou dans la deuxième position, de sorte à corriger au moins partiellement le défaut de géométrie mesuré,
- monter la pièce rapportée sur le volant.

Un tel procédé de fabrication présente l'avantage de pouvoir régler la position de la pièce rapportée avant même de monter la pièce rapportée. En effet, si la portion prédéfinie de référence, par exemple visible par l'utilisateur, est formée par un procédé ayant de grandes dispersions géométriques, alors c'est la principale cause de défauts géométriques, et on peut corriger ces défauts, au niveau de la pièce de base, avec les modules de réglage.

Ce procédé est particulièrement avantageux lorsque ladite au moins une empreinte présente un ajustement serré avec le dit au moins un pion, et/ou lorsque les moyens de réglage comprennent des moyens de maintien de ladite au moins une empreinte sur le dit au moins un pion. En effet, la pièce de base avec les moyens de réglage peut alors être transportée d'une usine à une autre pour finir l'assemblage.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue générale d'un volant de véhicule selon l'invention, comprenant des moyens de réglage d'une position d'une pièce rapportée sur une pièce de base ;
- la figure 2a présente une coupe partielle des moyens de réglage de la figure 1, selon une première direction A-A ;
- la figure 2b présente une coupe partielle des moyens de réglage de la figure 1, selon une deuxième direction B-B ;
- la figure 2c représente la coupe partielle de la figure 2a, avec les moyens de réglage dans une deuxième position de montage ;
- la figure 3 présente une vue en perspective d'une partie des moyens de réglage de la figure 1 ;
- la figure 4 présente une autre vue en perspective d'une autre partie des moyens de réglage de la figure 1 ;
- la figure 5 présente un détail d'une variante des moyens de réglage de la figure 1.

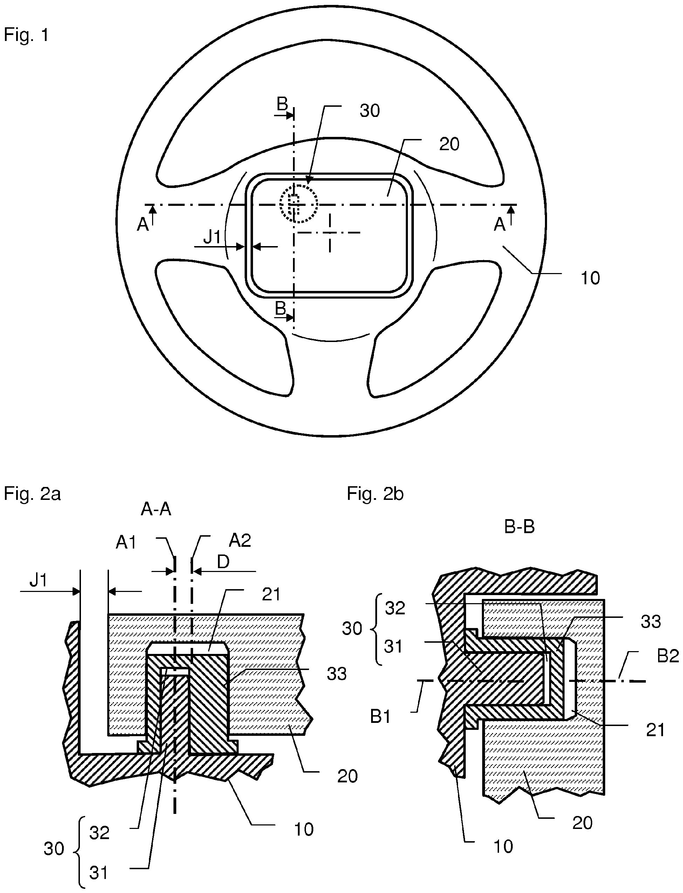

La figure 1 représente un volant de véhicule selon la présente invention, vu de dessus. Une pièce de base 10 embarque une pièce rapportée 20. Typiquement, la pièce rapportée 20 est un module de sécurité, autrement appelé module airbag. La pièce rapportée 20 est montée dans un logement de la pièce de base 10, et un espace entre ces deux pièces est visible. D'une manière générale, il faut prévoir un bon centrage ou un ajustement harmonieux entre la pièce rapportée 20 et la pièce de base 10, pour procurer une bonne qualité perçue (typiquement, les espaces entre les composant doivent être réguliers et homogènes).

En ce qui concerne le volant de la figure 1, il existe un besoin de régler le jeu J1 entre la pièce rapportée 20 et la pièce de base 10. En d'autres termes, il faut pouvoir régler la position de la pièce rapportée 10 suivant la direction horizontale de la figure 1, c'est-à-dire dans la direction de l'axe A-A.

A cet effet, l'invention propose de prévoir des moyens de réglage avec un module de réglage 30 entre la pièce rapportée 20 et la pièce de base 10. La figure 1 ne montre qu'un module de réglage 30, mais il est avantageux de prévoir deux modules de réglage 30 identiques, chacun monté entre la pièce de base 10 et la pièce rapportée 20, et tous deux agencés pour régler une position de la pièce rapportée selon la direction horizontale, dans cet exemple.

La figure 2a montre une coupe du module de réglage 30 selon l'axe A-A de la figure 1. Le module de réglage 30 comprend un pion 31 formant un élément de réception, et une empreinte 32 formant un élément de réglage, et formée dans une douille 33. Le pion 31 est en protubérance sur la pièce de base 10, et la douille 33 est engagée dans un alésage 21 de la pièce rapportée 20, formant une portion de centrage. En alternative, l'alésage 21 peut être une rainure, dans un autre mode de réalisation.

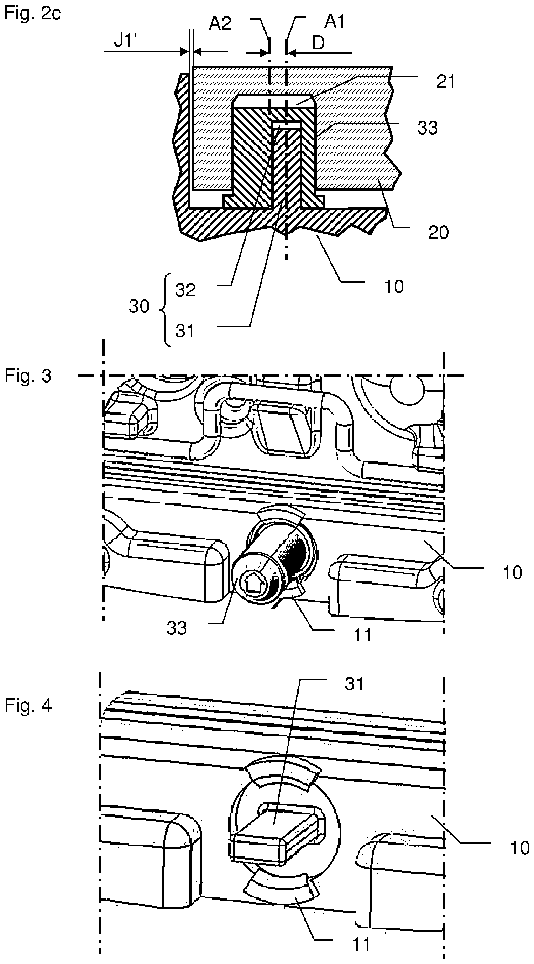

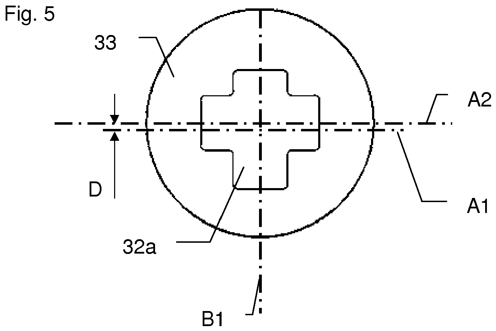

Comme on le voit figure 2a, le pion 31 s'étend le long d'une direction de projection A1. Comme on le voit figure 2a et surtout figure 4, le pion 31 est de forme prismatique. Comme on le voit figure 2a, 2b, et également figure 5, la douille 33 porte une empreinte 32 ou 32a qui est une contre-forme de la forme du pion 31, si bien qu'une fois monté comme figures 2a et 2b, aucune rotation entre le pion 31 et la douille 33 n'est possible, sans démonter ni endommager définitivement les pièces bien entendu.

La douille 33 est engagée dans l'alésage 21 de la pièce rapportée, qui présente un axe A2. L'invention propose de former la douille 33 avec l'empreinte 32 présentant un axe (coïncidant avec la direction de projection A1) décalé d'un axe de symétrie de sa surface extérieure (coïncidant avec l'axe A2) qui s'engage avec l'alésage 21, d'une valeur de décalage D. En conséquence comme on le voit figure 2a, le pion 31, monté dans cette position, engendre un décalage de l'axe A2 de l'alésage 21 par rapport à la direction de projection A1.

On comprend que si on dégage la douille 33 du pion 31 et qu'elle est remontée après une rotation de 180°, on décale la direction de projection ou axe A1 du pion 31 par rapport à l'axe A2 de l'alésage 21 dans la direction opposée, comme le montre la figure 2c (la pièce rapportée a donc été décalée vers la droite).

En conséquence, l'empreinte 32, décalée dans la douille 33 par rapport à sa surface extérieure qui s'engage dans l'alésage 21, permet de pouvoir imposer deux positions différentes de la pièce rapportée 20 par rapport à la pièce de base 10 en fonction du réglage souhaité. En particulier, la pièce rapportée 20 a été décalée selon une seule direction (la direction horizontale A-A de la figure 1), de plus ou moins la valeur du décalage D, par rapport à la pièce de base 10. Seule le jeu ou la dimension J1 (ou J1' figure 2c) est modifié quand on monte la douille 33 dans l'une ou l'autre position. En effet, comme on le voit figure 2b, l'axe B1 du pion 31 est aligné avec l'axe B2 de l'alésage 21, car l'empreinte 32 de la douille 33 n'est pas décalée par rapport à l'alésage 21 dans cette direction.

On peut voir figure 3 une vue en perspective de la douille 33, et notamment une flèche qui est formée sur sa surface extérieure. Cette flèche permet d'indiquer la direction du décalage D à un opérateur de montage, pour l'assister au montage du module de réglage 30.

On remarque aussi figure 3 et figure 4 que deux ergots 11 sont formés sur la pièce de base 10, pour maintenir en place la douille 33 sur le pion 31. Les deux ergots 11 pourront être formés en polyuréthane surmoulé sur une armature en magnésium, armature qui pourra former le ou les pions 31. Ainsi, un sous ensemble est formé et peut être transporté sans risque de perte de la douille 33. On peut alors envisager de fabriquer le volant en plusieurs étapes. En particulier, on peut fabriquer à un endroit la pièce de base 10 du volant, mesurer un éventuel défaut de géométrie, et monter une ou plusieurs douilles 33 sur un ou plusieurs pions 31 pour compenser le défaut mesuré, et ensuite envoyer ce sous ensemble dans une autre usine où sera montée la pièce rapportée 20, qui sera correctement positionnée grâce aux moyens de réglage 30 déjà en place.

Cette méthode de fabrication permet de prévenir le plus grand nombre de défauts car la pièce de base comprend généralement des parties en polymère injecté (une mousse polyuréthane par exemple), qui sont sources de grandes variations géométriques.

En alternative des ergots 11, on peut envisager d'autres moyens de maintien en place de la douille 33 sur le pion 31, et en particulier un montage serré, des pattes élastiquement déformées, un aimant, un emboîtement élastique... Pour les pattes élastiques, on peut en envisager deux, en regard l'une de l'autre pour pincer une partie dudit au moins un pion 31. On peut préférentiellement positionner ces pattes sur des surfaces de l'empreinte 32 qui ne sont pas en regard de ladite surface de référence pour que le serrage ne déforme pas la surface de référence et n'influe pas sur le réglage souhaité.

De plus, on peut prévoir que la douille 33 soit percée pour laisser accès au sommet du pion 31 pour y prendre une référence mécanique par exemple.

La figure 5 représente une variante de la douille 33, et en particulier de son empreinte 32a, qui comprend deux contre-formes du pion 31, orientées à 90° l'une de l'autre. Une seule des contre-formes est décalée par rapport à la surface extérieure de la douille 33. Il s'agit de la contre-forme verticale d'axe A1 qui est décalée vers le bas, dans le sens de sa longueur, par rapport à l'axe A2 (représentant l'axe de l'alésage 21, et/ou l'axe du cylindre extérieur de la douille 33). La contre forme horizontale n'est pas décalée, et son axe B1 coïncide avec l'axe du diamètre extérieur de la douille 33.

En conséquence, on obtient trois positions de montage possibles : une première position décalée dans une direction quand la contre-forme verticale est montée dans une première position, une deuxième position décalée dans une direction opposée quand la contre-forme verticale est montée dans une deuxième position (à 180° de la première position) et une troisième position, médiane ou neutre, quand c'est la contre-forme horizontale qui reçoit le pion 31.

Bien entendu, si la contre forme horizontale était elle aussi décalée par rapport à la surface extérieure de la douille 33, quatre positions de réglage pourraient être obtenue avec seulement deux contre forme mais il n'y aurait dans ce cas pas de réglage neutre possible.

Une fois les modules de réglage montés, tout déréglage est impossible, sans détériorer ou démonter les pièces à nouveau. Chaque douille présente un nombre limité et fini de possibilités de réglage, ce qui simplifie le système complet. On peut prévoir un kit de réglage avec plusieurs douilles présentant des valeurs de décalage différentes, pour affiner les possibilités de réglage. On peut prévoir de différencier les douilles entre elles par des couleurs spécifiques par exemple.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à une douille portant l'empreinte, et amovible par rapport au volant. On peut cependant prévoir de rendre le pion amovible. Par ailleurs, la douille est engagée avec la pièce rapportée, et le pion avec la pièce de base, mais on peut prévoir le contraire.

## Revendications

1. Moyens de réglage agencés pour régler une position entre :
- une pièce de base (10) d'un volant de véhicule, telle qu'une armature, et
- une pièce rapportée (20) du volant de véhicule, comprenant par exemple un module de sécurité, et embarquée sur la pièce de base (10),
par le biais d'au moins une portion de centrage solidaire de l'une de la pièce de base (10) ou de la pièce rapportée (20),
les moyens de réglage étant agencés pour s'engager avec l'autre de la pièce de base (10) ou de la pièce rapportée, et comprenant une surface de référence agencée pour s'engager avec ladite au moins une portion de centrage,
les moyens de réglage comprennent au moins un module de réglage (30) avec :
- au moins un élément de réception (31) allongé le long d'une direction de projection (A1),
- au moins un élément de réglage (32 ; 32a) avec une contre-forme agencée pour recevoir ledit au moins un élément de réception (31), pour empêcher une rotation autour de la direction de projection (A1), entre ledit au moins un élément de réception (31) et ledit au moins un élément de réglage (32 ; 32a),
en ce que ledit au moins un élément de réglage (32 ; 32a) est agencé pour s'assembler avec ledit au moins un élément de réception (31) selon une première position de montage ou au moins une deuxième position de montage,
et **caractérisés en ce que** l'un dudit au moins un élément de réception (31) ou dudit au moins un élément de réglage (32 ; 32a) est solidaire de la surface de référence et décalé par rapport à la surface de référence, pour décaler l'autre dudit au moins un élément de réception (31) ou dudit au moins un élément de réglage (32 ; 32a) par rapport à la portion de centrage lorsque la surface de référence est engagée avec la portion de centrage, de sorte à imposer une première position de la pièce rapportée (20) par rapport à la pièce de base (10) dans la première position de montage, ou à imposer une deuxième position de la pièce rapportée (20) par rapport à la pièce de base (10) dans la deuxième position de montage.

2. Moyens de réglage selon la revendication précédente, agencés pour régler la position de la pièce rapportée (20) dans un plan de base, et dans lequel la direction de projection (A1) est perpendiculaire au plan de base.

3. Moyens de réglage selon l'une des revendications précédentes, dans lesquels ladite au moins une deuxième position de montage est orientée à 180° de la première position de montage par rapport à la direction de projection (A1).

4. Moyens de réglage selon l'une des revendications précédentes, dans lesquels ledit au moins un élément de réglage (32 ; 32a) est agencé pour s'assembler avec ledit au moins un élément de réception (31) selon au moins une troisième position de montage,
et dans lesquels ledit un dudit au moins un élément de réception (31) ou dudit au moins un élément de réglage (32 ; 32a) est agencé pour positionner l'autre dudit au moins un élément de réception (31) ou dudit au moins un élément de réglage (32 ; 32a) par rapport à la portion de centrage, de sorte à imposer une troisième position de la pièce rapportée (20) par rapport à la pièce de base (10) dans la troisième position de montage.

5. Moyens de réglage selon l'une des revendications précédentes, dans lesquels les moyens de réglage sont agencés pour régler la position de la pièce rapportée (20) dans une seule direction.

6. Moyens de réglage selon l'une des revendications précédentes, comprenant des moyens de maintien élastiques dudit au moins un élément de réglage (32 ; 32a) sur ledit au moins un élément de réception (31), au moins selon la direction de projection (A1).

7. Moyens de réglage selon l'une des revendications précédentes, dans lesquels ledit au moins un élément de réglage (32 ; 32a) présente un ajustement serré avec ledit au moins un élément de réception (31).

8. Moyens de réglage selon l'une des revendications précédentes, dans lesquels ledit au moins un élément de réception (31) présente une section transversale procurant un arrêt en rotation par rapport à la direction de projection (A1).

9. Volant de véhicule comprenant :
- une pièce de base, telle qu'une armature,
- au moins une pièce rapportée, comprenant par exemple un module de sécurité, et embarquée sur la pièce de base,
- des moyens de réglage selon l'une des revendications précédentes.

10. Volant de véhicule selon la revendication précédente, dans lequel ladite au moins une portion de centrage présente un axe médian et/ou un plan médian d'accouplement avec les moyens de réglage, et dans lequel, ledit un dudit au moins un élément de réception (31) ou dudit au moins un élément de réglage (32 ; 32a) est décalé par rapport à l'axe médian et/ou au plan médian d'accouplement.

11. Volant de véhicule selon l'une des revendications 9 à 10, dans lequel ledit au moins un élément de réception (31) est solidaire de la pièce de base (10), et ledit au moins un élément de réglage (32 ; 32a) est agencée sur une douille amovible, agencée pour s'engager avec la pièce rapportée (20).

12. Volant de véhicule selon l'une des revendications 9 à 11, dans lequel les moyens de réglage comprennent deux modules de réglage (30).

13. Volant de véhicule selon l'une des revendications 9 à 12, dans lequel la pièce rapportée (20) est une platine fixe d'avertisseur sonore, montée de manière fixe par rapport à la pièce de base (10) par l'intermédiaire dudit au moins un module de réglage (30), et comprenant un module de sécurité mobile par rapport à la pièce rapportée (20).

14. Véhicule automobile comprenant un volant de véhicule selon l'une des revendications 9 à 13.

15. Kit de réglage pour les moyens de réglage selon l'une des revendications 1 à 8, comprenant une pluralité dudit au moins un élément de réception (31) ou dudit au moins un élément de réglage (32 ; 32a) agencé pour décaler l'autre dudit au moins un élément de réception (31) ou dudit au moins un élément de réglage (32 ; 32a) par rapport à la portion de centrage, chacun agencé pour décaler d'une valeur spécifique l'autre dudit au moins un élément de réception (31) ou dudit au moins un élément de réglage (32 ; 32a) par rapport à la portion de centrage.

## Patentansprüche

1. Einstellmittel, die angeordnet sind zum Einstellen einer Position zwischen:
- einem Basisteil (10) eines Lenkrads für ein Fahrzeug, beispielsweise einem Skelett, und
- einem Ansatzteil (20) des Lenkrads für ein Fahrzeug, das beispielsweise ein Sicherheitsmodul umfasst und an dem Basisteil (10) untergebracht ist,
über mindestens einen Zentrierabschnitt, der fest mit dem Basisteil (10) oder dem Ansatzteil (20) verbunden ist,
wobei die Einstellmittel so angeordnet sind, dass sie mit dem anderen Element, Basisteil (10) oder Ansatzteil, in Eingriff gelangen, und eine Bezugsfläche umfassen, die so angeordnet ist, dass sie mit dem mindestens einen Zentrierabschnitt in Eingriff gelangt,
wobei die Einstellmittel mindestens ein Einstellmodul (30) umfassen mit:
- mindestens einem Aufnahmeelement (31), das eine Projektionsrichtung (A1) entlang gestreckt ist,
- mindestens einem Einstellelement (32; 32a) mit einer Gegenform, die so angeordnet ist, dass sie das mindestens eine Aufnahmeelement (31) aufnimmt, um eine Drehung um die Projektionsrichtung (A1) zwischen dem mindestens einen Aufnahmeelement (31) und dem mindestens einen Einstellelement (32; 32a) zu verhindern,
dadurch, dass das mindestens eine Einstellelement (32; 32a) so angeordnet ist, dass es mit dem mindestens einen Aufnahmeelement (31) in einer ersten Montageposition oder mindestens einer zweiten Montageposition montiert wird,
und **dadurch gekennzeichnet, dass** ein Element, das mindestens eine Aufnahmeelement (31) oder das mindestens eine Einstellelement (32; 32a), fest mit der Bezugsfläche verbunden und bezogen auf die Bezugsfläche versetzt ist, damit das andere Element, das mindestens eine Aufnahmeelement (31) oder das mindestens eine Einstellelement (32; 32a), bezogen auf den Zentrierabschnitt versetzt wird, wenn die Bezugsfläche mit dem Zentrierabschnitt in Eingriff ist, damit das Ansatzteil (20) bezogen auf das Basisteil (10) in der ersten Montageposition in eine erste Position gebracht wird oder damit das Ansatzteil (20) bezogen auf das Basisteil (10) in der zweiten Montageposition in eine zweite Position gebracht wird.

2. Einstellmittel nach dem vorhergehenden Anspruch, die zum Einstellen der Position des Ansatzteils (20) in einer Basisebene angeordnet sind, und wobei die Projektionsrichtung (A1) senkrecht zur Basisebene verläuft.

3. Einstellmittel nach einem der vorhergehenden Ansprüche, wobei die mindestens eine zweite Montageposition bezogen auf die Projektionsrichtung (A1) um 180° zur ersten Montageposition ausgerichtet ist.

4. Einstellmittel nach einem der vorhergehenden Ansprüche, wobei das mindestens eine Einstellelement (32; 32a) so angeordnet ist, dass es mit dem mindestens einen Aufnahmeelement (31) in mindestens einer dritten Montageposition montiert wird,
und wobei das eine Element, das mindestens eine Aufnahmeelement (31) oder das mindestens eine Einstellelement (32; 32a), so angeordnet ist, dass es das andere Element, das mindestens eine Aufnahmeelement (31) oder das mindestens eine Einstellelement (32; 32a), bezogen auf den Zentrierabschnitt positioniert, damit das Ansatzteil (20) bezogen auf das Basisteil (10) in der dritten Montageposition in eine dritte Position gebracht wird.

5. Einstellmittel nach einem der vorhergehenden Ansprüche, wobei die Einstellmittel so angeordnet sind, dass sie die Position des Ansatzteils (20) in eine einzige Richtung einstellen.

6. Einstellmittel nach einem der vorhergehenden Ansprüche, die elastische Haltemittel für das mindestens eine Einstellelement (32; 32a) an dem mindestens einen Aufnahmeelement (31) zumindest in der Projektionsrichtung (A1) umfassen.

7. Einstellmittel nach einem der vorhergehenden Ansprüche, wobei das mindestens eine Einstellelement (32; 32a) mit dem mindestens einen Aufnahmeelement (31) einen Festsitz aufweist.

8. Einstellmittel nach einem der vorhergehenden Ansprüche, wobei das mindestens eine Aufnahmeelement (31) einen Querschnitt aufweist, der bezogen auf die Projektionsrichtung (A1) ein Anhalten der Drehbewegung bewirkt.

9. Lenkrad für Fahrzeug, umfassend:
- ein Basisteil, beispielsweise ein Skelett,
- mindestens ein Ansatzteil, das beispielsweise ein Sicherheitsmodul umfasst und an dem Basisteil untergebracht ist,
- Einstellmittel nach einem der vorhergehenden Ansprüche.

10. Lenkrad für Fahrzeug nach dem vorhergehenden Anspruch, wobei der mindestens eine Zentrierabschnitt eine Mittelachse und/oder eine Mittelebene zur Verbindung mit den Einstellmitteln aufweist, und wobei das eine Element, das mindestens eine Aufnahmeelement (31) oder das mindestens eine Einstellelement (32; 32a), bezogen auf die Verbindungsmittelachse und/oder die Verbindungsmittelebene versetzt ist.

11. Lenkrad für Fahrzeug nach Anspruch 9 oder 10, wobei das mindestens eine Aufnahmeelement (31) fest mit dem Basisteil (10) verbunden ist und das mindestens eine Einstellelement (32; 32a) an einer beweglichen Hülse angeordnet ist, die so angeordnet ist, dass sie mit dem Ansatzteil (20) in Eingriff gelangt.

12. Lenkrad für Fahrzeug nach einem der Ansprüche 9 bis 11, wobei die Einstellmittel zwei Einstellmodule (30) umfassen.

13. Lenkrad für Fahrzeug nach einem der Ansprüche 9 bis 12, wobei das Ansatzteil (20) eine feste Hupenplatte ist, die über das mindestens eine Einstellmodul (30) bezogen auf das Basisteil (10) fest montiert ist und ein bezogen auf das Ansatzteil (20) bewegliches Sicherheitsmodul umfasst.

14. Kraftfahrzeug, das ein Lenkrad für ein Fahrzeug nach einem der Ansprüche 9 bis 13 umfasst.

15. Einstell-Kit für die Einstellmittel nach einem der Ansprüche 1 bis 8, das eine Vielzahl von dem mindestens einen Aufnahmemittel (31) oder dem mindestens einen Einstellelement (32; 32a) umfasst, das so angeordnet ist, dass es das andere Element, das mindestens eine Aufnahmeelement (31) oder das mindestens eine Einstellelement (32; 32a), bezogen auf den Zentrierabschnitt versetzt, wobei jedes so angeordnet ist, dass es das andere Element, das mindestens eine Aufnahmeelement (31) oder das mindestens eine Einstellelement (32; 32a), bezogen auf den Zentrierabschnitt um einen bestimmten Wert versetzt.

## Claims

1. Regulating means designed to regulate a position between:
- a base part (10) of a vehicle steering wheel such as a frame, and
- an added piece (20) of the vehicle steering wheel, comprising, for example, a security module, and placed on the base part (10),
by at least one centring portion integral with the base part (10) or with the added piece (20),
which regulating means is designed to engage with the base part (10) or with the added piece, and comprising a reference surface designed to engage with said at least one centring portion,
which regulating means comprises at least one regulating module (30) with:
- at least one receiving element (31) extending along a projection direction (A1),
- at least one regulating element (32; 32a) with a counter-shape designed to receive the at least one receiving element (31) in order to prevent a rotation about the projection direction (A1) between said at least one receiving element (31) and said at least one regulating element (32; 32a),
and in which said at least one regulating element (32; 32a) is designed to be assembled with said at least one receiving element (31) according to a first mounting position or to at least a second mounting position, and
**characterized in that**
one of said at least one receiving element (31) or said at least one regulating element (32; 32a) is integral with the reference surface and offset relative to the reference surface in order to offset the other one of said at least one receiving element (31) or said at least one regulating element (32; 32a) relative to the centring portion when the reference surface is engaged with the centring portion in such a manner as to impose a first position of the added piece (20) relative to the base part (10) in the first mounting position, or to impose a second position of the added piece (20) relative to the base part (10) in the second mounting position.

2. Regulating means according to the previous claim, designed to regulate the position of the added piece (20) in a base plane, and in which the projection direction (A1) is perpendicular to the base plane.

3. Regulating means according to one of the previous claims, wherein said at least one second mounting position is oriented at 180° from the first mounting position relative to the projection direction (A1).

4. Regulating means according to one of the previous claims, wherein said at least one regulating element (32; 32a) is designed to be assembled with said at least one receiving element (31) according to at least one third mounting position,
and wherein said one of said at least one receiving element (31) or said at least one regulating element (32; 32a) is designed to position the other one of said at least one receiving element (31) or said at least one regulating element (32; 32a) relative to the centring portion in such a manner as to impose a third position of the added piece (20) relative to the base part (10) in the third mounting position.

5. Regulating means according to one of the previous claims, wherein the regulating means is designed to regulate the position of the added piece (20) in a single direction.

6. Regulating means according to one of the previous claims, comprising elastic maintaining means of said at least one regulating element (32; 32a) on said at least one receiving element (31) at least according to the projection direction (A1).

7. Regulating means according to one of the previous claims, wherein said at least one regulating element (32; 32a) has an adjustment tightened with said at least one receiving element (31).

8. Regulating means according to one of the previous claims, wherein said at least one receiving element (31) has a cross section which brings about a stop of rotation relative to the projection direction (A1).

9. Vehicle steering wheel comprising:
- a base part such as a frame,
- at least one added piece comprising, for example, a security module, and placed on the base part,
- regulating means according to one of the previous claims.

10. Vehicle steering wheel according to the previous claim, wherein said at least one centring portion has a median axis and/or a median plane for being coupled to the regulating means, and wherein said one of said at least one receiving element (31) or said at least one regulating element (32; 32a) is offset relative to the median axis and/or to the median coupling plane.

11. Vehicle steering wheel according to one of claims 9 to 10, wherein said at least one receiving element (31) is integral with the base part (10), and said at least one regulating element (32; 32a) is arranged on a movable casing designed to engage with the added piece (20).

12. Vehicle steering wheel according to one of claims 9 to 11, wherein the regulating means comprises two regulating modules (30).

13. Vehicle steering wheel according to one of claims 9 to 12, wherein the added piece (20) is a fixed horn plate mounted in a fixed manner relative to the base part (10) by said at least one regulating module (30) and comprising a security module which is mobile relative to the added piece (20).

14. Automobile comprising a vehicle steering wheel according to one of claims 9 to 13.

15. Regulating kit for the regulating means according to one of claims 1 to 8, comprising a plurality of said at least one receiving element (31) or of said at least one regulating element (32; 32a) arranged to offset the other one of said at least one receiving element (31) or said at least one regulating element (32; 32a) relative to the centring portion, each one of which is designed to offset by a specific value the other one of said at least one receiving element (31) or of said at least one regulating element (32; 32a) relative to the centring portion.
